# EUROPEAN PATENT SPECIFICATION

(11) **EP 3 428 448 B1**
(45) Date of publication and mention of the grant of the patent: **01.12.2021**
(21) Application number: 18181922.8
(22) Date of filing: 05.07.2018
(51) Int. Cl.: F03D 80/70

(54) **COMPOUND MAIN BEARING ARRANGEMENT FOR A WIND TURBINE**
VERBUNDHAUPTLAGERANORDNUNG FÜR EINE WINDTURBINE
AGENCEMENT DE PALIER PRINCIPAL DE COMPOSANT POUR TURBINE ÉOLIENNE

(30) Priority: 14.07.2017 US 201715649734
(43) Date of publication of application: 16.01.2019
(73) Proprietor: General Electric Company, Schenectady, NY 12345 (US)
(72) Inventor: WILSON, Ian David, Greenville, South Carolina 29615 (US); MCGRATH, Edward Lee, Greenville, South Carolina 29615 (US)
(74) Representative: de Rooij, Mathieu Julien

(56) References cited:
- EP-A1- 1 677 005
- EP-A1- 2 568 167
- EP-A1- 2 921 728
- US-A1- 2010 215 307
- US-A1- 2012 070 280
- US-A1- 2015 369 284

## Description

The present subject matter relates generally to wind turbines and, more particularly, to compound main bearing arrangements for rotatable main shafts of wind turbines.

Generally, a wind turbine includes a tower, a nacelle mounted on the tower, and a rotor coupled to the nacelle. The rotor generally includes a rotatable hub and a plurality of rotor blades coupled to and extending outwardly from the hub. Each rotor blade may be spaced about the hub so as to facilitate rotating the rotor to enable kinetic energy to be converted into usable mechanical energy, which may then be transmitted to an electric generator disposed within the nacelle for the production of electrical energy. Typically, a gearbox is used to drive the electric generator in response to rotation of the rotor. For instance, the gearbox may be configured to convert a low speed, high torque input provided by the rotor to a high speed, low torque output that may drive the electric generator.

A wind turbine typically includes many bearings that provide relative movement between adjacent parts in a relatively efficient, low-friction manner. For example, in most wind turbines a "main shaft" extends from the rotor and into the nacelle and is supported by one or more "main bearings." Additionally, the gearbox in the nacelle that steps up the angular speed of the main shaft includes several bearings. Furthermore, the yaw control system that rotates the nacelle relative to the tower to turn the rotor into/out of the wind, and the pitch control system that rotates the blades about their longitudinal axis also include various bearings that allow for enhanced operation of the wind turbine.

Conventionally, these main bearings are configured as roller element bearings characterized by having a structural element (e.g., a ball bearing) disposed between the two components which are moving relative to one another. Roller element bearings fail for any number of reasons, but ultimately their life is limited by surface fatigue and wear. Such limited-life components require regular maintenance so as to avoid larger scale failure modes. The replacement parts and maintenance for such limited-life components increase the overall costs of operating a wind turbine.

Accordingly, wind turbine and bearing manufacturers strive for improved or alternate designs that extend the operating life of the bearings.

Journal bearings are generally known in the art as having a long operating life. The main reason for this is that, unlike roller element bearings, journal bearings do not have any structural element disposed between the two relative moving components, but instead have only a fluid film disposed therebetween. Thus, the wear and fatigue issues associated with roller elements, as well as the costs associated with their replacement and maintenance, may be avoided. Consequently, journal bearings appear to provide an attractive alternative to roller element bearings. Additionally, journal bearings are designed to eliminate surface-to-surface contact and thus operate with even lower friction, which may further increase efficiency.

Due to the unpredictability of the wind, start-up and shut-downs that occur with wind turbines, and the resultant range of operating conditions, manufacturers have traditionally relied on roller element bearings. However, roller element bearings alone are sometimes insufficient for wind turbines that are subject to large bending loads caused by varying wind speeds and directions around the rotor swept area. These bending loads are transferred to the rotor shaft and reacted through the rotor main bearings. The bending loads are more dominant than the other shear and axial loads and are typically reacted to the static main frame through a pair of axially spaced predominantly radially loaded bearings. When the axial spacing is short the bearings are highly loaded and expensive. When they are spaced apart they are less expensive but require a more expensive longer main shaft.

To this end, it would be desirable to utilize journal bearings, optionally in combination with roller element bearings, in a wind turbine compound main bearing that is simple, small, and compact configuration and can stably support radial loads and axial loads as well as increase the operating life of the bearings and decrease the costs associated with replacement and maintenance.

US2012070280 discloses a wind turbine, comprising a tower, a nacelle adjacent a top of the tower, blades extending from a hub to rotate a rotor, a main rotary shaft coupled to the rotor extending within the nacelle, and a main bearing assembly coupled to a framework of the nacelle for supporting the shaft. The main bearing assembly includes a bearing surface formed in a bearing insert where cavities are formed to receive thrust pads for accommodating the loading of the main rotary shaft.

US2010215307 refers to an axial-radial bearing for a wind turbine rotor shaft main bearing comprising a ring-shaped outer disk arranged vertically, and an inner ring arranged coaxially with respect to the outer disk. Two ring shaped shaft disks are arranged axially adjacent to the outer disk on both sides, each with at least one row of rolling bodies held by one bearing cage, rolling between the two shaft disks and the outer disk for absorbing axial forces. At least one further row of rolling bodies is arranged between the outer disk and the inner ring forming a third rolling bearing for absorbing radial forces.

EP2568167 shows a direct-drive wind turbine comprising a rotor directly connected with a rotating drive train that is connected with a wind turbine stationary part via at least one plain bearing comprising at least one cylindrical sliding surface to support radial loads in the drive train, and at least two radial bearing surfaces (with a surface area to support axial loads and bending moments in the drive train.

EP1677005 discloses a wind turbine comprising a nacelle mounted on a tower. A main shaft is arranged in the nacelle to which a rotating blade is fitted. The main shaft is connected to a gear-box input shaft and is supported to the nacelle via a tapered roller bearing that may comprise a row of rollers receiving a radial load and a pair of rows of rollers receiving a thrust load. The roller bearing is provided coaxially with the main shaft between one end in the main shaft axial direction and a wall portion, which projects from a connecting portion between a nacelle shell body and a nacelle floor portion, so as to support the main shaft rotatably around the main shaft axis. The main shaft is thus supported to the wall portion via the double-row tapered roller bearing.

Various aspects and advantages of the invention will be set forth in part in the following description, or may be clear from the description, or may be learned through practice of the invention.

The present invention relates to a drive train according to claim 1 and to a wind turbine comprising this drive train according to claim 6.

In one aspect, a drive train of a wind turbine is disclosed as having a rotatable hub, a gearbox, a rotatable rotor shaft extending between the rotatable hub and the gearbox, and a main bearing assembly supporting the rotatable rotor shaft, the main bearing assembly having a main bearing housing enclosing one or more compound bearings, each of the one or more compound bearings having at least two axial thrust bearings and a radial bearing.

In another aspect, a wind turbine is disclosed as having a tower; a nacelle mounted atop the tower; a generator and bearing pedestal coupled to a main frame within the nacelle; a gearbox coupled to the generator via a generator shaft; a rotatable hub; a rotatable rotor shaft extending between the rotatable hub and the gearbox; and a main bearing assembly coupled with the bearing pedestal and supporting the rotatable rotor shaft, the main bearing assembly having a main bearing housing enclosing one or more compound bearings, each of the one or more compound bearings having at least two axial thrust bearings and a radial bearing.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

In the drawings:
FIG. 1 illustrates a perspective view of one embodiment of a wind turbine of conventional construction;
FIG. 2 illustrates a perspective, interior view of one embodiment of a nacelle of a wind turbine;
FIG. 3 is a schematic of the components and loading on an exemplary compound main bearing assembly;
FIG. 4 is a perspective of an exemplary compound main bearing assembly;
FIG. 5 is a perspective of an exemplary compound main bearing assembly showing tilt pad axial journal bearings.

Repeat use of reference characters in the present specification and drawings is intended to represent the same or analogous features or elements of the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope of the invention. For instance, features illustrated or described as part of one embodiment can be used with another embodiment to yield a still further embodiment. Thus, it is intended that the present invention covers such modifications and variations as come within the scope of the appended claims.

In general, the present subject matter discloses a compound bearing arrangement to handle loads that were previously reacted to the main frame through a pair of axially spaced predominantly radially loaded bearings. When the axial spacing between the pair of bearings is short, the bearings are highly loaded and expensive. When they are spaced apart they are less expensive but require a more expensive longer shaft. If the bearings have a very short axial spacing but are larger diameter the predominant reaction load in the bearings is in the axial direction so the moments can be reacted by axial bearings which, although larger in diameter, can be more compact and hence less expensive. When using larger diameter axial bearings, the radial loads (vertical and lateral) are typically much smaller and can be reacted by a smaller inexpensive radial bearing.

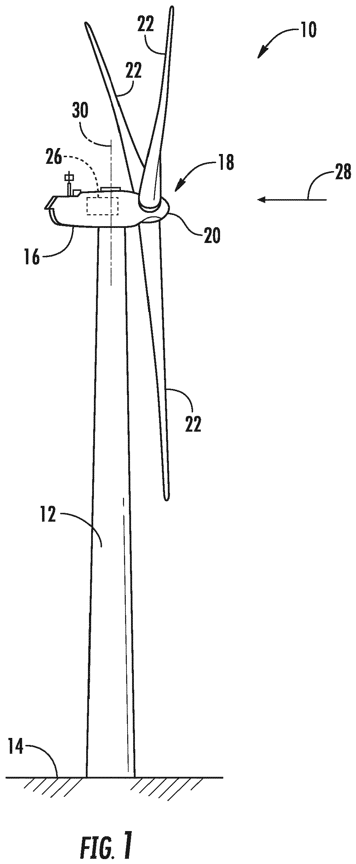

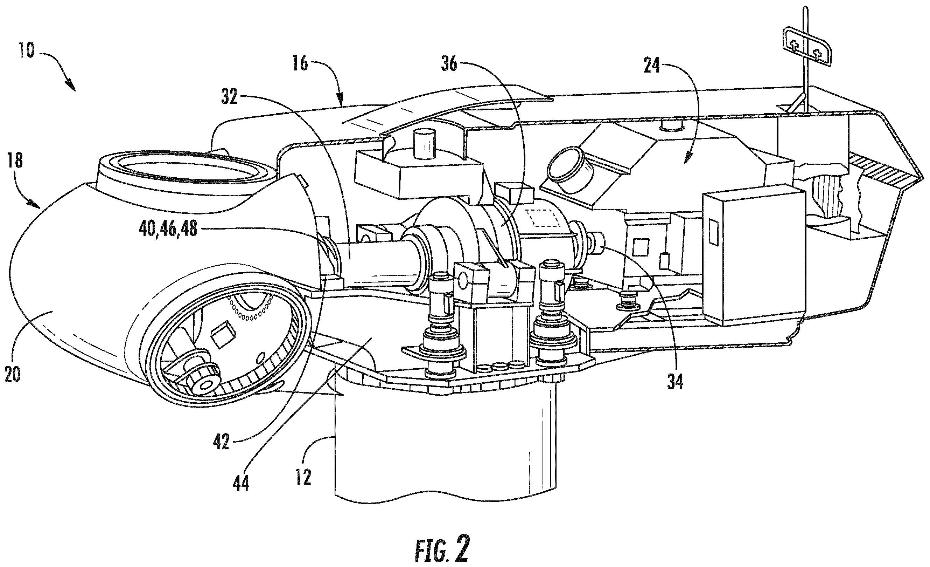

Referring now to the drawings, FIG. 1 illustrates a perspective view of one embodiment of a wind turbine 10 of conventional construction. As shown, the wind turbine 10 includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

Referring now to FIG. 2, a simplified, internal view of one embodiment of a nacelle 16 of a wind turbine 10 is illustrated. As shown, a generator 24 may be disposed within the nacelle 16. In general, the generator 24 may be coupled to the rotor 18 of the wind turbine 10 for producing electrical power from the rotational energy generated by the rotor 18. For example, as shown in the illustrated embodiment, the rotor 18 may include a rotor shaft 32 coupled to the hub 20 for rotation therewith. The rotor shaft 32 may, in turn, be rotatably coupled to a generator shaft 34, sometimes referred to as the high speed shaft (HSS), of the generator 24 through a gearbox 36 having a gearbox output shaft. As is generally understood, the rotor shaft 32 may provide a low speed, high torque input to the gearbox 36 in response to rotation of the rotor blades 22 and the hub 20. The gearbox 36 may then be configured to convert the low speed, high torque input to a high speed, low torque output to drive the generator shaft 34 (HSS), and thus, the generator 24.

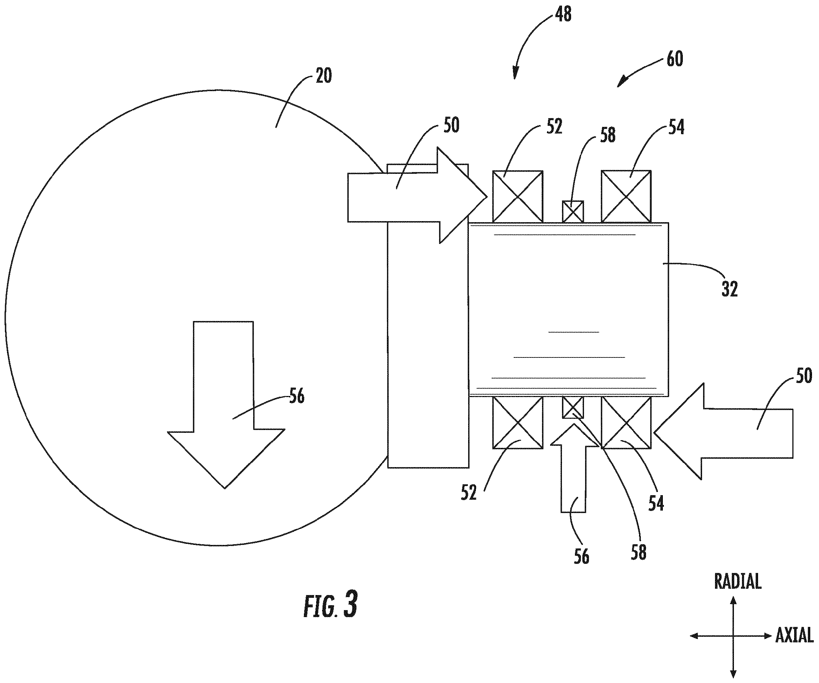

Main bearings 40, sometimes referred to as the rotor bearings, are housed in a main bearing assembly 48 that is supported by a main bearing pedestal 42 attached to the main frame 44 of the wind turbine with a main bearing housing 46 enclosing the main bearings 40. The main bearings 40 can be configured to react to loading as shown in FIG. 3, where the axial loads 50 are imposed on a pair of axial thrust bearings 52, 54 and the radial loads 56 are imposed on a radial bearing 58. This main bearing 40 arrangement is referred to as a compound bearing 60, herein.

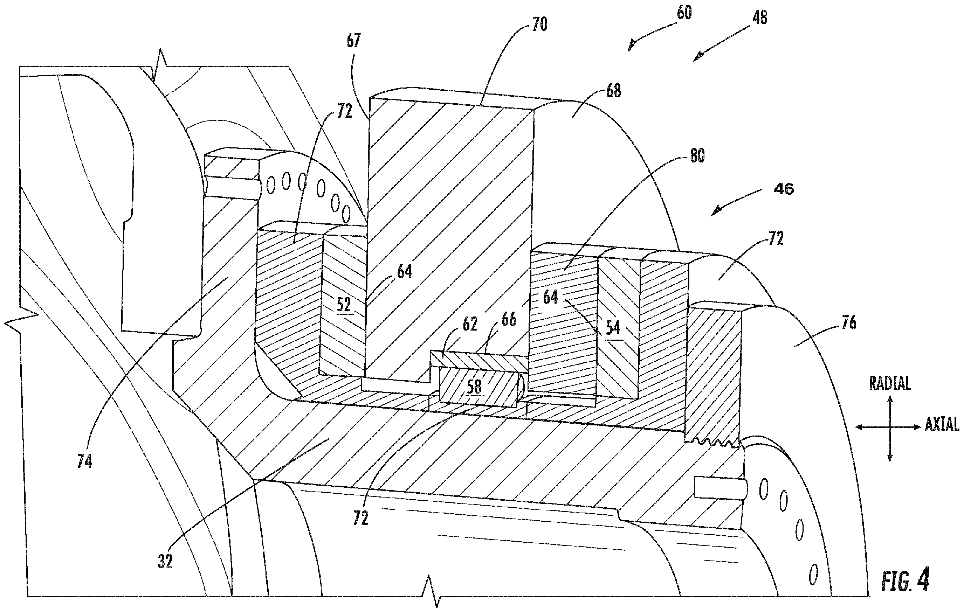

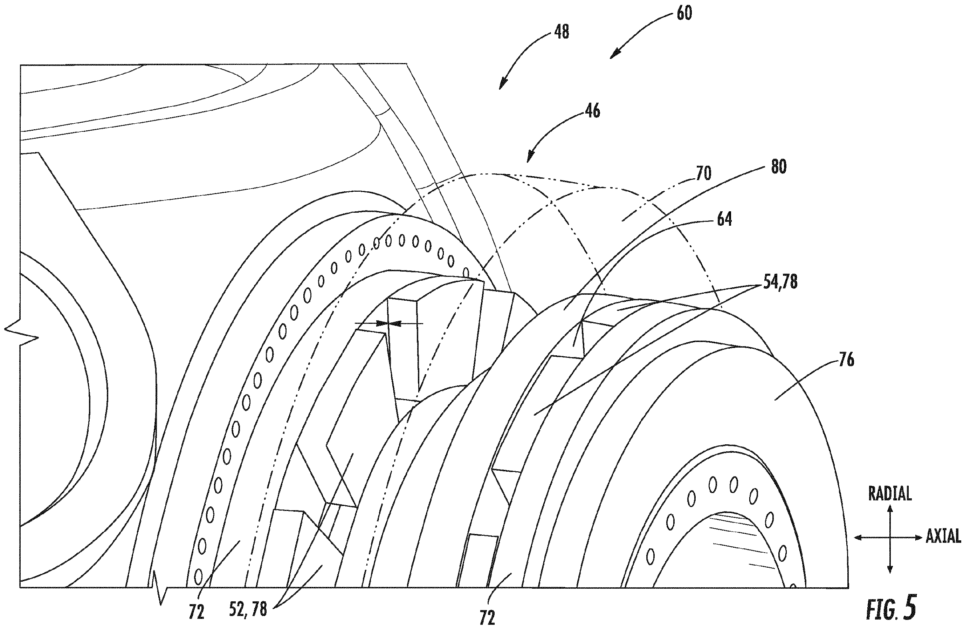

One embodiment of the main bearing assembly 48 can have a main bearing housing 46 (not shown) that houses the compound bearing 60 and is further shown in FIGS. 4 and 5 as a three-row structure with the radial bearing pad 62 positioned at right angles (90 degrees) from the axial bearing pads 64. The axial bearing pads 64 can be adjacent a static spacer 80 that is removable to enable access and assembly of the radial bearing 58. The radial bearing pad 62 for the radial bearing 58 can be disposed circumferentially around the inner surface 66 a fixed raceway annulus 70. The fixed raceway annulus 70 can be coupled to the main bearing housing 46. The axial thrust bearing pads (at least two rows) for the axial thrust bearings 52, 54 can be disposed circumferentially around the rotatable rotor shaft 32 on opposing sides of the fixed raceway annulus 70. The axial thrust bearings 52, 54 can extend in the radial direction and be disposed on opposing first and second radial surfaces 67, 68 of the same fixed raceway annulus 70. Rotatable raceway components 72 can be attached to rotor shaft 32 having a removable retainer flange 76 that retains the compound bearing 60 inside the main bearing assembly 48, yet allows removal of the compound bearing 60. The one or more compound bearings 60 can have rotatable raceway components 72 disposed adjacent the at least two axial thrust bearings 52, 54 and the radial bearing 58, with the rotatable raceway components configured as the inner radial raceway surface and axial exterior raceway surface. The rotor shaft 32 can be removably coupled to the rotatable hub 20 via a shaft flange 74 to the opposing end of rotor shaft 32.

It should be appreciated that the axial thrust bearings 52, 54 and the radial bearing 58 can be rolling element, for example roller bearings or ball bearings, and/or journal bearings. All bearings can also be either hydrostatic or hydrodynamic bearings. Using axially loaded thrust bearings instead of conventional vertically loaded radial bearings improves the main bearing arrangement for wind turbines. Journal hydrostatic thrust bearings instead of conventional rolling element bearings is one embodiment that enables the improvement. Another improved embodiment is a combination of rolling element and journal bearings wherein the radial bearing can be a rolling element and the thrust bearings can be journal bearings.

The compound bearing can be specifically configured such that the first and second axial thrust bearings 52, 54 are journal bearings with tilting pads 78 that enable a tilting movement in at least one direction of rotation of the bearing. A white metal or a resin overlay, low in frictional coefficient to the sliding surfaces, can be applied to the tilting pads 78. Elastic support seats can be inserted with tilting pads 78 to correct any unevenness in distribution of loads applied to the tilting pads 78.

Also, a lubricating mechanism for the compound bearing can be at least one fluid supply groove, for example oil, that can be cut in the fixed raceway annulus, and at least one fluid supply hole, communicating with the fluid supply groove(s), which can pass through the inner surface 66, the first axial surface 67, and the second axial surface 68 of the fixed raceway annulus, thus supplying lubricating fluid (oil) to the radial and axial thrust bearing pads.

This written description uses examples to disclose the invention, including the preferred mode, and also to enable any person skilled in the art to practice the invention, including making and using any devices or systems and performing any incorporated methods. The patentable scope of the invention is defined by the claims.

## Claims

1. A drive train of a wind turbine (10), the drive train comprising:
a rotatable hub (20),
a gearbox (36),
a rotatable rotor shaft (32) extending between the rotatable hub (20) and the gearbox (36), and,
a main bearing assembly (48) supporting the rotatable rotor shaft (32), the main bearing assembly (48) comprising a shaft flange (74) for removably coupling the rotatable rotor shaft (32) to the rotatable hub (20) and a main bearing housing (46) enclosing one or more compound bearings (60), each of the one or more compound bearings (60) comprising at least two axial thrust bearings (52, 54) and a radial bearing (58),
wherein the one or more compound bearings (60) further comprise rotatable raceway components (72) disposed adjacent the at least two axial thrust bearings (52, 54) and the radial bearing (58) configured as inner radial and axial exterior raceway surfaces respectively, wherein
the shaft flange (74) is attached to the rotatable raceway components (72), and wherein
the shaft flange (74) further comprises a removable retainer flange (76) configured to retain the one or more compound bearings (60) inside the main bearing assembly (48).

2. The drive train of claim 1, wherein the main bearing assembly (48) is coupled to a main bearing pedestal (42) extending from a main frame (44).

3. The drive train of any preceding claim, wherein the one or more compound bearings (60) further comprise;
a radial bearing pad (62) disposed circumferentially around at least a portion of an inner surface (66) of a fixed raceway annulus (70), and,
at least two axial thrust bearing pads (64) disposed circumferentially around the rotatable rotor shaft (32) on opposing sides of the fixed raceway. annulus (70).

4. The drive train of any preceding claim, wherein the at least two axial thrust bearings (52, 54) and the radial bearings (58) comprises at least one of roller bearings, journal bearings, ball bearings or combinations thereof.

5. The drive train of any preceding claim, wherein each of the at least two axial thrust bearings (52, 54) comprise at least one tilting pad (78) arranged therewith so as to enable a tilting movement in a least one direction of rotation of the at least two axial thrust bearings (52, 54).

6. A wind turbine (10), comprising:
a tower (12);
a nacelle (16) mounted atop the tower (12);
a generator (24) and bearing pedestal (42) coupled to a main frame (44) within the nacelle (16); and
the drive train of any preceding claim.

## Patentansprüche

1. Antriebsstrang einer Windturbine (10), wobei der Antriebsstrang umfasst:
eine drehbare Nabe (20),
ein Getriebe (36),
eine drehbare Rotorwelle (32), die sich zwischen der drehbaren Nabe (20) und dem Getriebe (36) erstreckt, und
eine Hauptlageranordnung (48), die die drehbare Rotorwelle (32) trägt, wobei die Hauptlageranordnung (48) einen Wellenflansch (74) zum lösbaren Koppeln der drehbaren Rotorwelle (32) mit der drehbaren Nabe (20) und ein Hauptlagergehäuse (46) umfasst, das ein oder mehrere Verbundlager (60) umschließt, wobei jedes des einen oder der mehreren Verbundlager (60) mindestens zwei Axialdrucklager (52, 54) und ein Radiallager (58) umfasst,
wobei das eine oder die mehreren Verbundlager (60) ferner drehbare Laufringkomponenten (72) umfassen, die benachbart zu den mindestens zwei Axialdrucklagern (52, 54) und dem Radiallager (58) angeordnet sind, die als innere radiale bzw. axiale äußere Laufringoberflächen ausgelegt sind, wobei
der Wellenflansch (74) an den drehbaren Laufringkomponenten (72) befestigt ist, und wobei
der Wellenflansch (74) ferner einen abnehmbaren Halteflansch (76) umfasst, der ausgelegt ist, um das eine oder die mehreren Verbundlager (60) innerhalb der Hauptlageranordnung (48) zu halten.

2. Antriebsstrang nach Anspruch 1, wobei die Hauptlageranordnung (48) mit einem Hauptlagerbock (42) gekoppelt ist, der sich von einem Hauptrahmen (44) erstreckt.

3. Antriebsstrang nach einem der vorhergehenden Ansprüche, wobei das eine oder die mehreren Verbundlager (60) ferner umfassen;
ein radiales Lagersegment (62), das in Umfangsrichtung um mindestens einen Abschnitt einer Innenfläche (66) eines festen Laufringkreisrings (70) herum angeordnet ist, und
mindestens zwei axiale Drucklagersegmente (64), die in Umfangsrichtung um die drehbare Rotorwelle (32) herum auf gegenüberliegenden Seiten des festen Laufringkreisrings (70) angeordnet sind.

4. Antriebsstrang nach einem der vorhergehenden Ansprüche, wobei die mindestens zwei Axialdrucklager (52, 54) und die Radiallager (58) mindestens eines von Rollenlagern, Achslagern, Kugellagern oder Kombinationen davon umfassen.

5. Antriebsstrang nach einem der vorhergehenden Ansprüche, wobei jedes der mindestens zwei Axialdrucklager (52, 54) mindestens ein damit angeordnetes Kippsegment (78) umfasst, um eine Kippbewegung in mindestens einer Drehrichtung der mindestens zwei Axialdrucklager (52, 54) zu ermöglichen.

6. Windturbine (10), umfassend:
einen Turm (12);
eine Gondel (16), die auf dem Turm (12) montiert ist;
einen Generator (24) und einen Lagerbock (42), die mit einem Hauptrahmen (44) innerhalb der Gondel (16) verbunden sind; und
den Antriebsstrang nach einem der vorhergehenden Ansprüche.

## Revendications

1. Chaîne cinématique d'une turbine éolienne (10), la chaîne cinématique comprenant :
un moyeu rotatif (20),
une boîte de vitesses (36),
un arbre de rotor rotatif (32) s'étendant entre le moyeu rotatif (20) et la boîte de vitesses (36), et,
un ensemble palier principal (48) supportant l'arbre de rotor rotatif (32), l'ensemble palier principal (48) comprenant une bride d'arbre (74) pour coupler de manière amovible l'arbre de rotor rotatif (32) au moyeu rotatif (20) et un boîtier de palier principal (46) renfermant un ou plusieurs paliers de composant (60), chacun des un ou plusieurs paliers de composant (60) comprenant au moins deux paliers de butée axiaux (52, 54) et un palier radial (58),
dans lequel le ou les paliers de composant (60) comprennent en outre des composants de chemin de roulement rotatifs (72) disposés adjacents aux au moins deux paliers de butée axiaux (52, 54) et au palier radial (58) configurés respectivement comme surfaces de chemin de roulement radiales intérieures et extérieures axiales, dans lequel
la bride d'arbre (74) est fixée aux composants de chemin de roulement rotatifs (72), et dans lequel
la bride d'arbre (74) comprend en outre une bride de retenue (76) amovible configurée pour retenir le un ou plusieurs paliers de composant (60) à l'intérieur de l'ensemble palier principal (48).

2. Chaîne cinématique selon la revendication 1, dans laquelle l'ensemble palier principal (48) est couplé à un socle de palier principal (42) s'étendant à partir d'un châssis principal (44).

3. Chaîne cinématique selon l'une quelconque des revendications précédentes, dans laquelle le un ou plusieurs paliers de composant (60) comprennent en outre ;
un patin de palier radial (62) disposé circonférentiellement autour d'au moins une partie d'une surface intérieure (66) d'un anneau de chemin de roulement fixe (70), et,
au moins deux patins de butée axiaux (64) disposés circonférentiellement autour de l'arbre de rotor rotatif (32) sur des côtés opposés de l'anneau de chemin de roulement fixe (70).

4. Chaîne cinématique selon l'une quelconque des revendications précédentes, dans laquelle les au moins deux paliers de butée axiaux (52, 54) et les paliers radiaux (58) comprennent au moins l'un parmi les paliers à roulement, les paliers lisses, les paliers à billes ou des combinaisons de ceux-ci.

5. Chaîne cinématique selon l'une quelconque des revendications précédentes, dans laquelle chacun des au moins deux paliers de butée axiaux (52, 54) comprend au moins un patin oscillant (78) agencé avec celui-ci de manière à permettre un mouvement oscillant dans au moins un sens de rotation des au moins deux paliers de butée axiaux (52, 54).

6. Turbine éolienne (10), comprenant :
une tour (12) ;
une nacelle (16) montée au sommet de la tour (12) ;
un générateur (24) et un socle de palier (42) couplés à un châssis principal (44) à l'intérieur de la nacelle (16) ; et
la chaîne cinématique selon l'une quelconque des revendications précédentes.
